# EUROPEAN PATENT APPLICATION

(11) **EP 4 831 500 A1**
(43) Date of publication of application: **28.10.2026**
(21) Application number: 24926546.3
(22) Date of filing: 17.04.2024
(51) Int. Cl.: F16B 39/28, B60K 1/04

(54) **MOUNTING DEVICE, BATTERY KIT, AND ELECTRIC VEHICLE**

(30) Priority: 26.02.2024 CN 202420346748 U
(71) Applicant: Contemporary Amperex Technology Co., Limited, Ningde, Fujian 352100 (CN)
(72) Inventor: WU, Kai, Ningde, Fujian 352100 (CN); CHAN, Libing, Ningde, Fujian 352100 (CN)
(74) Representative: Lorenz Seidler Gossel Part. mbB
(86) International application number: PCT/CN2024/088305
(87) International publication number: WO 2025/179674

(57) **Abstract**

Disclosed are a mounting device, a battery kit, and an electric vehicle. The mounting device (100) comprises a mounting screw (10), a pressing cap (20), a locking sleeve (30), a tightening threaded sleeve (40) and a first sealing member (51), wherein a first end **(11)** of the mounting screw is configured to sequentially pass through the locking sleeve, a workpiece to be mounted and a mounting body (220) in the direction from the locking sleeve to the workpiece to be mounted; the pressing cap is connected to the first end of the mounting screw and is configured to abut against the mounting body; an external thread (13) is provided on a second end (12) of the mounting screw; the tightening threaded sleeve is in threaded connection with the second end of the mounting screw, so as to prevent the locking sleeve from disengaging from the mounting screw; and the first sealing member is configured to seal a gap between the mounting screw and a hole wall of a through hole in the locking sleeve. By means of the mounting device, the problem of it being impossible to fully seal a clearance notch provided in a locking sleeve of an existing mounting device is solved.

## Description

The present application claims priority to Chinese patent application filed with the China National Intellectual Property Administration on February 26, 2024, with application No. 202420346748.6 and titled "MOUNTING DEVICE, BATTERY KIT, AND ELECTRIC VEHICLE", which is incorporated herein by reference in its entirety.

### TECHNICAL FIELD

The present application relates to the technical field of new energy battery installation tools, and particularly relates to a mounting device, a battery kit, and an electric vehicle.

### BACKGROUND

In the related art, for workpieces that need to be quickly disassembled and replaced, the workpieces are assembled and fixed on a carrier via a mounting device. When the workpieces need to be replaced, operations such as quick disassembly, replacement, and installation of the workpieces can be achieved through the mounting device.

With the continuous development of electric vehicles, the popularity of electric vehicles is continuously increasing. The batteries of electric vehicles are continuously depleted during use, and when the service life of the batteries reaches the usage limit, the batteries need to be replaced. In order to achieve quick replacement of the batteries, the batteries are assembled and fixed on the vehicle frame via the mounting device.

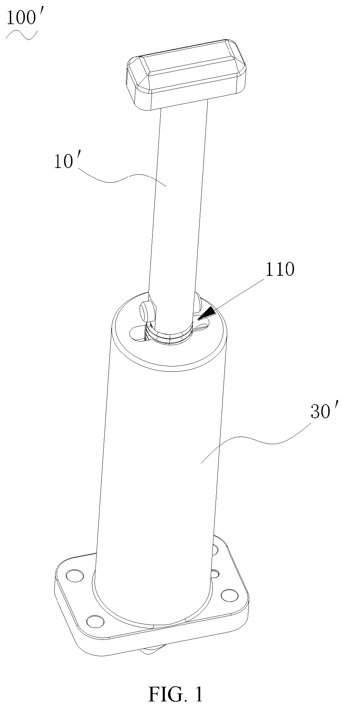

As shown in FIG. 1, a mounting device a 100' includes a mounting screw a 10', a lock sleeve a 30', and a tightening member. When a battery is mounted and fixed to a carrier using the mounting device a 100', the mounting screw a 10' sequentially passes through the carrier, the battery, and the lock sleeve a 30' from top to bottom, and the mounting screw is then screwed with the tightening member to block the lock sleeve from disengaging from the mounting screw a 10', so that the mounting screw a 10' and the lock sleeve a 30' together mount and fix the battery on the carrier. In the mounting device a 100', since the screw body of the mounting screw a 10' is provided with a protruding structure for cooperating with the internal structure of the lock sleeve a 30', the lock sleeve a 30' must be provided with a clearance notch 110 for avoiding the protruding structure to complete the insertion of the mounting screw a 10' into the interior of the lock sleeve a 30' from top to bottom. The lock sleeve a 30' is provided with the clearance notch 110, and the irregular shape of the clearance notch 110 causes the clearance notch 110 to be unable to be completely sealed. This causes the lubricating substance in the lock sleeve a 30' to volatilize and be lost, and external moisture and impurities to enter the lock sleeve a 30' from the clearance notch 110, thus resulting in wear and corrosion of the component structures in the lock sleeve a 30'.

### SUMMARY

An objective of the embodiments of the present application is to provide a mounting device, a battery kit, and an electric vehicle, including but not limited to solving the problem that the clearance notch provided in the lock sleeve of the existing mounting device cannot be completely sealed, causing the lubricating substance in the lock sleeve to volatilize and be lost, and external moisture and impurities to enter the lock sleeve, thus resulting in wear and corrosion.

The technical solution adopted by the embodiments of the present application is:

According to a first aspect of the present application, a mounting device is provided, including:
a mounting screw, having a first end and a second end, the second end of the mounting screw being provided with an external thread;
a lock sleeve, the lock sleeve being fixedly disposed in a relative position with respect to a to-be-mounted workpiece, and the first end of the mounting screw being configured to sequentially pass through the lock sleeve, the to-be-mounted workpiece, and a carrier along a direction from the lock sleeve to the to-be-mounted workpiece;
a pressure cap, connected to the first end of the mounting screw, the pressure cap being configured to abut against the carrier;
a tightening screw sleeve, provided with a threaded hole adapted to the external thread, the tightening screw sleeve being screwed with the second end of the mounting screw, and the tightening screw sleeve blocking the lock sleeve from disengaging from the mounting screw, so that the to-be-mounted workpiece and the carrier clamp the pressure cap and the lock sleeve therebetween; and
a first sealing member, sleeved on the mounting screw and located at a through hole of the lock sleeve, the first sealing member being configured to seal a gap between the mounting screw and a hole wall of the through hole of the lock sleeve.

Compared with the existing mounting device a, the mounting device of the present application no longer provides a clearance notch, and sequentially passes through the lock sleeve, the to-be-mounted workpiece, and the carrier along a direction from the lock sleeve to the to-be-mounted workpiece, thereby making the through hole of the lock sleeve a circular hole adapted to the screw body of the mounting screw. In this way, the gap between the mounting screw and the hole wall of the through hole of the lock sleeve can be completely sealed using the first sealing member, preventing volatilization and loss of the lubricating substance in the lock sleeve, and preventing external moisture and impurities from entering the interior of the lock sleeve from the gap between the mounting screw and the hole wall of the through hole of the lock sleeve, thereby preventing the problem of wear and corrosion.

In some embodiments of the present application, the screw body of the mounting screw is provided with a guide pin head, the hole wall of the through hole of the lock sleeve has a guide chute, the guide pin head is slidably disposed in the guide chute, and the first sealing member is disposed between the guide chute and an end surface of the lock sleeve away from the second end of the mounting screw. Further, an extension direction of the guide chute is obliquely disposed with respect to an axis of the lock sleeve, the lock sleeve is provided with a limiting portion, and the limiting portion is configured to cooperate with the to-be-mounted workpiece to limit rotation of the lock sleeve relative to the to-be-mounted workpiece. The relative movement between the lock sleeve and the mounting screw is guided by the mutual cooperation of the guide pin head and the guide chute, making the relative movement process between the lock sleeve and the mounting screw stable and accurate.

In some embodiments of the present application, the limiting portion is a flange structure disposed at an end of the lock sleeve away from the pressure cap, and the flange structure is configured to be fixedly connected to the to-be-mounted workpiece, thereby making the relative position between the lock sleeve and the to-be-mounted workpiece fixedly disposed.

In some embodiments of the present application, the pressure cap is fixedly connected to the first end of the mounting screw; or the pressure cap is detachably connected to the first end of the mounting screw.

In some embodiments of the present application, a projection of the pressure cap along an axial direction of the mounting screw has a long side direction and a short side direction that are perpendicular to each other, where after the long side direction of the pressure cap rotates relative to the carrier, the pressure cap is capable of abutting against the carrier.

In some embodiments of the present application, the guide chute penetrates to an outer side wall of the lock sleeve, the mounting device further includes a second sealing member, and the second sealing member is fitted and sealed in the guide chute, sealing the guide chute from the outside. In this way, the lubricating substance in the lock sleeve does not volatilize and is not lost from the guide chute to the outside, and external moisture and impurities cannot enter the lock sleeve from the guide chute, preventing the problem of wear and corrosion. The second sealing member is spaced apart from the guide pin head, thereby ensuring that the guide pin head does not interfere with the movement of the second sealing member when the guide pin head relatively slides in the guide chute.

In some embodiments of the present application, the number of guide pin heads is two, and the two guide pin heads are symmetrically disposed with respect to an axis of the mounting screw; and the number of guide chutes is two, and the two guide chutes are disposed in one-to-one correspondence with the two guide pin heads. In this way, the mounting screw does not skew relative to the lock sleeve, making the relative movement between the mounting screw and the lock sleeve stable and smooth.

In some embodiments of the present application, the mounting device further includes a pin rod member, the pin rod member is installed on the mounting screw, an axis of the pin rod member is perpendicular to the axis of the mounting screw, and both ends of the pin rod member protrude from the mounting screw to respectively form the two guide pin heads. This forming method for obtaining the two guide pin heads is simple and effective, with high forming efficiency.

In some embodiments of the present application, the through hole of the lock sleeve includes a first hole section and a second hole section, a first step surface is formed between the first hole section and the second hole section, an end of the guide chute away from the pressure cap penetrates to the first step surface, and the guide pin head directly slides into the guide chute from the slot end opening of the guide chute on the first step surface, with high assembly efficiency. The mounting device further includes a third sealing member, and the third sealing member is disposed between an end surface of the tightening screw sleeve close to the pressure cap and the first step surface to achieve a sealing arrangement, which can further seal the interior of the lock sleeve.

In some embodiments of the present application, the guide chute includes a first slot section and a second slot section that are in communication, an extension direction of the first slot section is obliquely disposed with respect to the axis of the lock sleeve, an extension direction of the second slot section is parallel to the axis of the lock sleeve, and by the sliding distance of this second slot section, a little floating gap is reserved between the to-be-mounted workpiece and the carrier, thereby facilitating the mounting operation. Moreover, an end of the second slot section away from the first slot section penetrates to the first step surface.

In some embodiments of the present application, the mounting device further includes a cover assembly and a fourth sealing member, the cover assembly is installed at an end of the through hole of the lock sleeve away from the pressure cap, the tightening screw sleeve is provided with a second step surface, the fourth sealing member is sleeved on the tightening screw sleeve and abuts against the second step surface, and a side of the fourth sealing member away from the second step surface abuts against the cover assembly. In this way, the interior of the lock sleeve is further sealed, thereby better preventing volatilization and loss of the lubricating substance in the lock sleeve, and better preventing external moisture and impurities from entering the interior of the lock sleeve, preventing the problem of wear and corrosion.

In some embodiments of the present application, the hole wall of the through hole of the lock sleeve is provided with a first mounting annular groove, and the first sealing member is installed in the first mounting annular groove. In this way, the first sealing member is restricted in the first mounting annular groove, and the first sealing member does not slide along the axial direction of the lock sleeve to disengage from the first mounting annular groove.

According to a second aspect of the present application, a battery kit is provided. Specifically, the battery kit includes a battery and the mounting device, the battery includes a battery box, the battery box is provided with a mounting through hole, and the mounting screw of the mounting device sequentially passes through the mounting through hole and the carrier along a direction from the lock sleeve to the to-be-mounted workpiece.

According to a third aspect of the present application, an electric vehicle is provided. Specifically, the electric vehicle includes a vehicle frame and the aforementioned battery kit, and the battery is mounted and installed on the vehicle frame via the mounting device.

### BRIEF DESCRIPTION OF DRAWINGS

To more clearly illustrate the technical solutions in the embodiments of the present application, the accompanying drawings to be used in the description of the embodiments or exemplary technical descriptions will be briefly introduced below. Obviously, the drawings described below are only some embodiments of the present application. For those of ordinary skill in the art, other drawings can also be obtained based on these drawings without creative effort.
FIG. 1 is a schematic diagram of an assembly structure of an existing mounting device;
FIG. 2 is a schematic diagram of an assembly structure of a mounting device according to an embodiment of the present application;
FIG. 3 is a cross-sectional schematic diagram of the mounting device shown in FIG. 2;
FIG. 4 is an enlarged schematic diagram at A in FIG. 3;
FIG. 5 is an exploded schematic diagram of the mounting device shown in FIG. 2;
FIG. 6 is a cross-sectional schematic diagram of a lock sleeve in the mounting device shown in FIG. 2;
FIG. 7 is a schematic structural diagram of a first sealing member in the mounting device shown in FIG. 2;
FIG. 8 is a schematic diagram of an assembly structure of another mounting device according to an embodiment of the present application;
FIG. 9 is a cross-sectional schematic diagram of the mounting device shown in FIG. 8;
FIG. 10 is a schematic diagram of an assembly structure of a battery kit being assembled on a carrier according to an embodiment of the present application;
FIG. 11 is an enlarged schematic diagram at B in FIG. 10; and
FIG. 12 is a schematic structural diagram of an electric vehicle according to an embodiment of the present application.

Reference numerals in drawings:
100'. mounting device a; 10'. mounting screw a; 30'. lock sleeve a; 110. clearance notch;
100. mounting device;
10. mounting screw; 11. first end; 12. second end; 13. external thread; 14. guide pin head;
20. pressure cap;
30. lock sleeve; 31. guide chute; 311. first slot section; 312. second slot section; 32. limiting portion; 33. first hole section; 34. second hole section; 35. first step surface; 36. first mounting annular groove; 37. second mounting annular groove;
40. tightening screw sleeve; 41. threaded hole; 42. second step surface;
51. first sealing member; 511. first sealing fin; 512. second sealing fin; 513. third sealing fin; 52. second sealing member; 53. third sealing member; 54. fourth sealing member;
60. cover assembly; 61. cover body; 62. spring;
220. carrier; 221. through hole;
300. battery; 310. battery box;
400. electric vehicle; 410. vehicle frame; 420. drive motor; and 430. wheel.

### DESCRIPTION OF EMBODIMENTS

In order to make the objectives, technical solutions, and advantages of the present application clearer, the present application will be further described in detail below with reference to the accompanying drawings and embodiments. It should be understood that the specific embodiments described herein are only used to explain the present invention and are not used to limit the present application.

It should be noted that when a component is referred to as being "fixed to" or "disposed on" another component, it can be directly on the another component or indirectly on the another component. When a component is referred to as being "connected to" another component, it can be directly or indirectly connected to the another component. The orientations or positional relationships indicated by terms such as "upper", "lower", "left", and "right" are based on the orientations or positional relationships shown in the drawings, and are only for convenience of description, rather than indicating or implying that the referred means or element must have a specific orientation, be constructed and operated in a specific orientation, and therefore cannot be understood as a limitation to the present application. For those of ordinary skill in the art, the specific meanings of the above terms can be understood according to specific situations. The terms "first" and "second" are only used for descriptive purposes and cannot be understood as indicating or implying relative importance or implicitly indicating the number of technical features. The meaning of "multiple" is two or more, unless otherwise specifically defined.

In order to illustrate the technical solution provided in the present application, the following detailed description is made in combination with specific drawings and embodiments.

In the related art, the battery is assembled and fixed on the vehicle frame via the mounting device. As shown in FIG. 1, a mounting device a 100' includes a mounting screw a 10', a lock sleeve a 30', and a tightening member. When the to-be-mounted workpiece such as the battery is mounted and fixed to a carrier using the mounting device a 100', the mounting screw a 10' sequentially passes through the carrier, the to-be-mounted workpiece, and the lock sleeve a 30' from top to bottom, and the mounting screw is then screwed with the tightening member to block the lock sleeve from disengaging from the mounting screw a 10', so that the mounting screw a 10' and the lock sleeve a 30' together mount and fix the to-be-mounted workpiece on the carrier. In the mounting device a 100', since the screw body of the mounting screw a 10' is provided with a protruding structure for cooperating with the internal structure of the lock sleeve a 30', the lock sleeve a 30' must be provided with a clearance notch 110 for avoiding the protruding structure to complete the insertion of the mounting screw a 10' into the interior of the lock sleeve a 30' from top to bottom. The lock sleeve a 30' is provided with the clearance notch 110, and the irregular shape of the clearance notch 110 causes the clearance notch 110 to be unable to be completely sealed. This causes the lubricating substance in the lock sleeve a 30' to volatilize and be lost, and external moisture and impurities to enter the lock sleeve a 30' from the clearance notch 110, thus resulting in wear and corrosion of the component structures in the lock sleeve a 30'.

Based on the above considerations, the embodiments of the present application provide a new type of mounting device, the mounting device is matched with the battery to form a battery kit, and the battery kit is applied to an electric vehicle. In other words, the battery is mounted and fixed on the vehicle frame of the electric vehicle using the mounting device, thereby achieving convenient quick installation or quick disassembly and replacement of the battery. Compared with the existing mounting device, the mounting device provided in the embodiments of the present application no longer provides a clearance notch, and sequentially passes through the lock sleeve, the to-be-mounted workpiece, and the carrier along a direction from the lock sleeve to the to-be-mounted workpiece, thereby making the through hole of the lock sleeve a circular hole adapted to the screw body of the mounting screw. In this way, the gap between the mounting screw and the hole wall of the through hole of the lock sleeve can be completely sealed using the first sealing member, preventing volatilization and loss of the lubricating substance in the lock sleeve, and preventing external moisture and impurities from entering the interior of the lock sleeve from the gap between the mounting screw and the hole wall of the through hole of the lock sleeve, thereby preventing the problem of wear and corrosion.

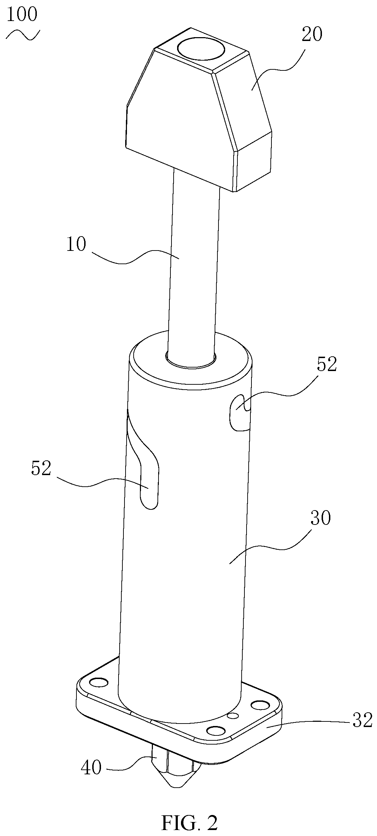

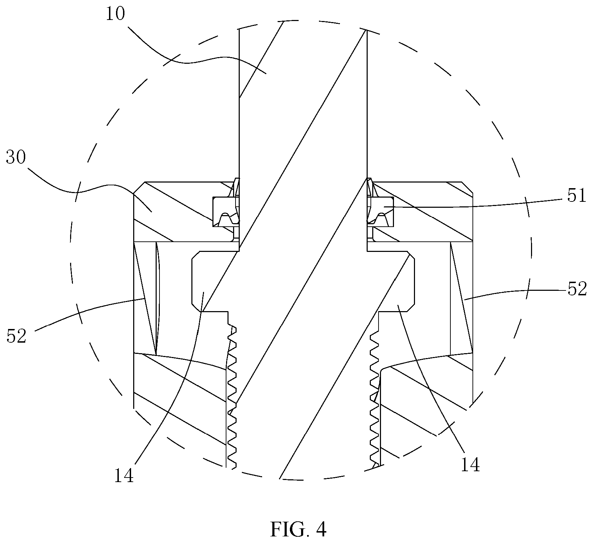

As shown in FIG. 2 to FIG. 7, the mounting device 100 provided in the embodiments of the present application includes a mounting screw 10, a pressure cap 20, a lock sleeve 30, a tightening screw sleeve 40, and a first sealing member 51. The lock sleeve 30 is sleeved on the mounting screw 10, and the lock sleeve 30 is fixedly disposed in a relative position with respect to the to-be-mounted workpiece. The mounting screw 10 has a first end 11 and a second end 12, and the first end 11 of the mounting screw 10 is configured to sequentially pass through the lock sleeve 30, the to-be-mounted workpiece, and the carrier 220 along a direction from the lock sleeve to the to-be-mounted workpiece. The pressure cap 20 is connected to the first end 11 of the mounting screw 10, and the pressure cap 20 is configured to abut against the carrier 220. The second end 12 of the mounting screw 10 is provided with an external thread 13, the tightening screw sleeve 40 is provided with a threaded hole 41 adapted to the external thread 13, the tightening screw sleeve 40 is screwed with the second end 12 of the mounting screw 10, an end surface of the tightening screw sleeve 40 close to the pressure cap 20 abuts against the lock sleeve 30, and the tightening screw sleeve 40 blocks the lock sleeve 30 from disengaging from the mounting screw 10. Therefore, when the tightening screw sleeve 40 is tightened with the external thread 13 of the mounting screw 10, the to-be-mounted workpiece and the carrier 220 clamp the pressure cap 20 and the lock sleeve 30 therebetween. The first sealing member 51 is sleeved on the mounting screw 10 and located at the through hole of the lock sleeve 30, and the first sealing member 51 is configured to seal a gap between the mounting screw 10 and a hole wall of the through hole of the lock sleeve 30.

When the to-be-mounted workpiece is mounted and fixed on the carrier 220 using the mounting device 100 of the present application, during assembly, the mounting screw 10 sequentially passes through the lock sleeve 30, the to-be-mounted workpiece, and the carrier 220 along a direction from the lock sleeve to the to-be-mounted workpiece, the lock sleeve 30 is fixedly connected to the to-be-mounted workpiece, and the pressure cap 20 is connected to the first end of the mounting screw 10. In this way, when the tightening screw sleeve 40 is tightened with the external thread 13 of the mounting screw 10, the to-be-mounted workpiece and the carrier 220 can clamp the pressure cap 20 and the lock sleeve 30 therebetween, that is, the to-be-mounted workpiece is mounted and fixed on the carrier 220. Compared with the existing mounting device a 100', the mounting device 100 of the present application no longer provides a clearance notch 110, and sequentially passes through the lock sleeve 30, the to-be-mounted workpiece, and the carrier 220 along a direction from the lock sleeve to the to-be-mounted workpiece, thereby making the through hole of the lock sleeve 30 a circular hole adapted to the screw body of the mounting screw 10. In this way, the gap between the mounting screw 10 and the hole wall of the through hole of the lock sleeve 30 can be completely sealed using the first sealing member 51, preventing volatilization and loss of the lubricating substance in the lock sleeve 30, and preventing external moisture and impurities from entering the interior of the lock sleeve 30 from the gap between the mounting screw 10 and the hole wall of the through hole of the lock sleeve 30, thereby preventing the problem of wear and corrosion.

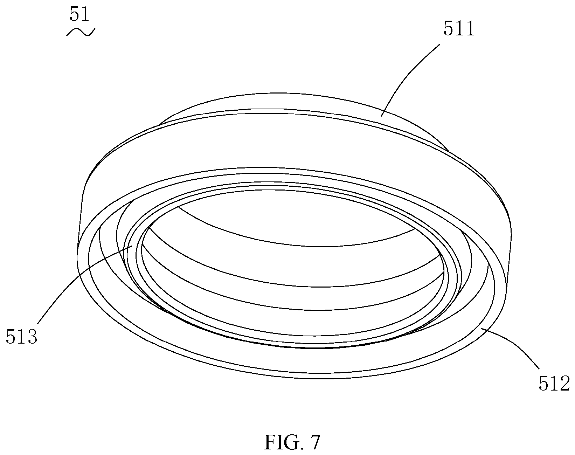

In some embodiments of the present application, as shown in FIG. 7, the overall contour shape of the first sealing member 51 is circular, where the first sealing member 51 includes a first sealing fin 511, a second sealing fin 512, and a third sealing fin 513. One end of the second sealing fin 512 and one end of the third sealing fin 513 meet and are fixedly connected, so that a "V-shaped" structure is formed between the second sealing fin 512 and the third sealing fin 513. Moreover, one end of the first sealing fin 511 is fixedly connected to the junction between the second sealing fin 512 and the third sealing fin 513, and therefore, a "Y-shaped" structure is formed among the first sealing fin 511, the second sealing fin 512, and the third sealing fin 513. It can be understood that the longitudinal section (a section parallel to its axial direction) of the first sealing member 51 is "Y-shaped". When the first sealing member 51 is sleeved on the mounting screw 10, the first sealing fin 511 and the third sealing fin 513 both abut against the screw body of the mounting screw 10, and the second sealing fin 512 abuts against the hole wall of the through hole of the lock sleeve 30, thereby completely sealing the gap between the mounting screw 10 and the hole wall of the through hole of the lock sleeve 30. Moreover, the first sealing member 51 with the "Y-shaped" structure has an excellent sealing effect on the gap between the mounting screw 10 and the hole wall of the through hole of the lock sleeve 30.

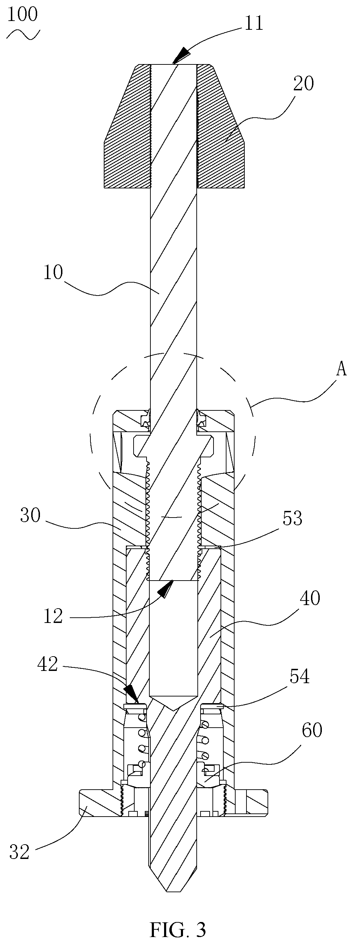

In some embodiments of the present application, as shown in FIG. 3 to FIG. 5, the screw body of the mounting screw 10 is provided with a guide pin head 14, and the hole wall of the through hole of the lock sleeve 30 has a guide chute 31. When the first end of the mounting screw 10 passes through the lock sleeve 30 along a direction from the lock sleeve to the to-be-mounted workpiece, the guide pin head 14 can be slidably disposed in the guide chute 31. In other words, when the tightening screw sleeve 40 is tightened with the external thread 13 of the mounting screw 10, the relative movement between the lock sleeve 30 and the mounting screw 10 is guided by the mutual cooperation of the guide pin head 14 and the guide chute 31, making the relative movement process between the lock sleeve 30 and the mounting screw 10 stable and accurate. Moreover, the first sealing member 51 is disposed between the guide chute 31 and an end surface of the lock sleeve 30 away from the second end 12 of the mounting screw 10. Therefore, when the first end of the mounting screw 10 passes through the through hole of the lock sleeve 30, the guide pin head 14 protruding from the screw body of the mounting screw 10 is not interfered with. Thus, the lock sleeve 30 of the mounting device 100 no longer needs to reserve a clearance notch 110 to avoid the guide pin head 14, and the first sealing member 51 with a circular contour can easily completely seal the gap between the screw body of the mounting screw 10 and the hole wall of the through hole of the lock sleeve 30.

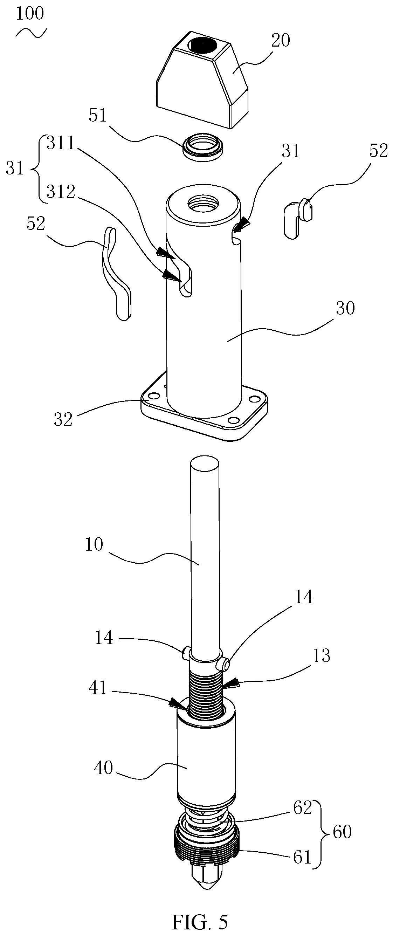

In some embodiments of the present application, as shown in FIG. 2 and FIG. 5, the lock sleeve 30 is provided with a limiting portion 32, and the limiting portion 32 is configured to cooperate with the to-be-mounted workpiece to limit rotation of the lock sleeve 30 relative to the to-be-mounted workpiece, that is, the relative position between the lock sleeve 30 and the to-be-mounted workpiece is fixedly disposed. Therefore, when the tightening screw sleeve 40 is tightened with the external thread 13 of the mounting screw 10, the tightening screw sleeve 40 screws in through cooperation with the external thread 13 of the mounting screw 10, thereby pushing the lock sleeve 30 by the tightening screw sleeve 40, making the lock sleeve 30 and the to-be-mounted workpiece move upward together relative to the mounting screw 10.

In some embodiments of the present application, as shown in FIG. 2, FIG. 3, FIG. 5, FIG. 6, FIG. 8, and FIG. 9, the limiting portion 32 is a flange structure disposed at an end of the lock sleeve 30 away from the pressure cap 20, and the flange structure is configured to be fixedly connected to the to-be-mounted workpiece. In this embodiment, the flange structure and the to-be-mounted workpiece are connected and fixed via multiple bolts, thereby making the relative position between the lock sleeve 30 and the to-be-mounted workpiece fixedly disposed.

In some other embodiments of the present application, the limiting portion 32 may further include but is not limited to a snap-fit structure, such as a limiting protrusion, and the to-be-mounted workpiece is provided with a groove matching the limiting protrusion. In this way, the limiting protrusion snaps into the groove, thereby making the relative position between the lock sleeve 30 and the to-be-mounted workpiece fixedly disposed.

In some embodiments of the present application, as shown in FIG. 2, FIG. 3, and FIG. 8 to FIG. 11, the fixed connection between the pressure cap 20 and the first end 11 of the mounting screw 10 includes but is not limited to welding fixation and threaded connection with limit pin fixation. In this embodiment, before the mounting device 100 is used to mount and fix the to-be-mounted workpiece to the carrier 220, the various components of the mounting device 100 are already assembled into a modular accessory, that is, the mounting screw 10, the pressure cap 20, the lock sleeve 30, and the tightening screw sleeve 40 are already assembled into a set. In other words, the first end of the mounting screw 10 first passes through the through hole of the lock sleeve 30 from the end of the lock sleeve 30 provided with the limiting portion 32, after the mounting screw 10 passes through the through hole of the lock sleeve 30, the guide pin head 14 is assembled into the guide chute 31, then the pressure cap 20 is fixed to the first end of the mounting screw 10, and the tightening screw sleeve 40 is screwed onto the external thread 13 of the mounting screw 10. The projection of the mounting screw 10 in the axial direction of the mounting screw 10 is located within the projection of the pressure cap 20 along the axial direction of the mounting screw 10. The carrier 220 is provided with a through hole 221, and the through hole 221 is for the pressure cap 20 to pass through.

Moreover, a projection of the pressure cap 20 along an axial direction of the mounting screw 10 has a long side direction and a short side direction that are perpendicular to each other. After the long side direction of the pressure cap 20 rotates relative to the carrier 220, the pressure cap 20 is capable of abutting against the carrier 220. Specifically, in some embodiments, the shape of the projection of the pressure cap 20 along the axial direction of the mounting screw 10 is rectangular. Accordingly, the carrier 220 is provided with a through hole 221, the through hole 221 is also a rectangular opening, and the through hole 221 can match the rectangular pressure cap 20 to pass through. During installation, when the mounting device 100 is used to mount and fix the to-be-mounted workpiece to the carrier 220, the first end of the mounting screw 10 together with the pressure cap 20 sequentially passes through the mounting through hole of the to-be-mounted workpiece and the through hole 221 of the carrier 220, and then the tightening screw sleeve 40 is screwed, making the lock sleeve 30 and the to-be-mounted workpiece move upward together relative to the carrier 220 (since the carrier 220 is always fixed, the carrier 220 serves as the movement reference for the lock sleeve 30, the mounting screw 10, and the tightening screw sleeve 40). The guide pin head 14 relatively moves in the guide chute 31, and an extension direction of the guide chute 31 is obliquely disposed with respect to an axis of the lock sleeve 30. Therefore, while the lock sleeve 30 and the to-be-mounted workpiece move upward together relative to the carrier 220, the mounting screw 10 and the pressure cap 20 rotate together relative to the carrier 220, making the pressure cap 20 misaligned with the through hole 221. In this way, the pressure cap 20 cannot disengage from the through hole 221 (that is, the pressure cap 20 cannot disengage from the carrier 220), until the to-be-mounted workpiece and the carrier 220 clamp the pressure cap 20 and the lock sleeve 30 therebetween, and then the to-be-mounted workpiece is mounted and fixed on the carrier 220 via the mounting device 100. The pressure cap 20 preferably rotates 90° relative to the carrier 220, that is, the guide pin head 14 slides relatively along the guide chute 31 and rotates 90° relative to the axis of the lock sleeve 30.

In some embodiments of the present application, the pressure cap 20 may also be detachably connected to the first end 11 of the mounting screw 10. In this embodiment, the through hole 221 provided in the carrier 220 is a circular hole matching the cross-sectional shape of the mounting screw 10. The mounting device 100 is an assembled modular accessory. Before the mounting device 100 is used to mount and fix the to-be-mounted workpiece to the carrier 220, the pressure cap 20 is disassembled, and then the first end of the mounting screw 10 sequentially passes through the mounting through hole of the to-be-mounted workpiece and the through hole 221 of the carrier 220. Next, the pressure cap 20 is connected to the first end of the mounting screw 10, so that the pressure cap 20 cannot disengage from the carrier 220, and then the tightening screw sleeve 40 continues to be screwed, making the lock sleeve 30 and the to-be-mounted workpiece move upward together relative to the carrier 220, until the to-be-mounted workpiece and the carrier 220 clamp the pressure cap 20 and the lock sleeve 30 therebetween. Thus, the to-be-mounted workpiece is mounted and fixed on the carrier 220 via the mounting device 100.

The mounting device 100 of the embodiments of the present application adopts a design structure formed as follows: before the mounting device 100 is used to mount and fix the to-be-mounted workpiece to the carrier 220, the various components of the mounting device 100 are already assembled into a modular accessory. In other words, the mounting screw 10, the pressure cap 20, the lock sleeve 30, and the tightening screw sleeve 40 are already assembled into a set, the pressure cap 20 is fixedly connected to the first end 11 of the mounting screw 10, and the shape of the projection of the pressure cap 20 in the axial direction of the mounting screw 10 is rectangular.

In some embodiments of the present application, as shown in FIG. 2 to FIG. 6, the guide chute 31 penetrates to the outer side wall of the lock sleeve 30. In this way, the guide chute 31 can be conveniently machined and formed by a milling cutter, with simple processing technology and high processing efficiency. Moreover, as shown in FIG. 2, FIG. 4, and FIG. 5, the mounting device 100 further includes a second sealing member 52, and the second sealing member 52 is fitted and sealed in the guide chute 31, thereby sealing the guide chute 31 from the outside. In this way, the lubricating substance in the lock sleeve 30 does not volatilize and is lost from the guide chute 31 to the outside, and external moisture and impurities cannot enter the lock sleeve 30 from the guide chute 31, preventing the problem of wear and corrosion. Moreover, the second sealing member 52 is spaced apart from the guide pin head 14, thereby ensuring that the guide pin head 14 does not interfere with the movement of the second sealing member 52 when the guide pin head 14 relatively slides in the guide chute 31.

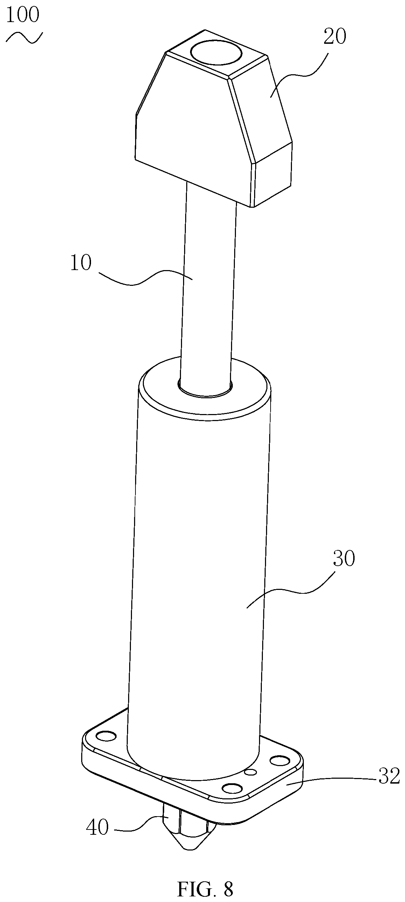

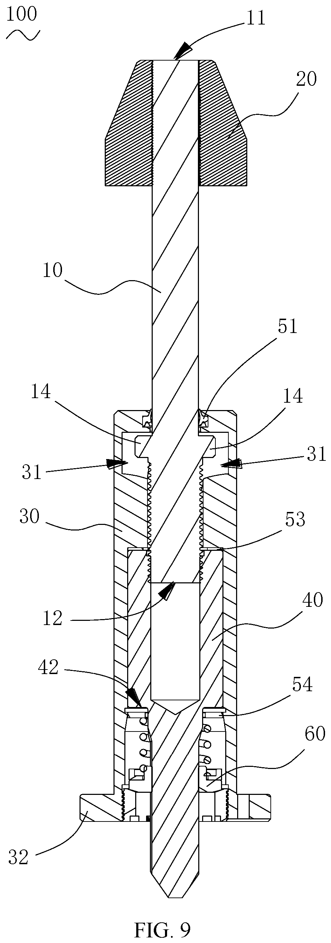

In some other embodiments of the present application, as shown in FIG. 8 and FIG. 9, the guide chute 31 may be a groove provided on the hole wall of the through hole of the lock sleeve 30, that is, the guide chute 31 does not penetrate to the outer side wall of the lock sleeve 30. In this embodiment, the guide chute 31 is locally machined and formed on the hole wall of the through hole of the lock sleeve 30 by a broaching process. This embodiment requires no use of the second sealing member 52, reducing the components of the mounting device 100 and simplifying the structure.

In some embodiments of the present application, as shown in FIG. 3, FIG. 5, and FIG. 9, the number of guide pin heads 14 is two, and the two guide pin heads 14 are symmetrically disposed with respect to an axis of the mounting screw 10. Accordingly, as shown in FIG. 3 to FIG. 6 and FIG. 9, the number of guide chutes 31 is two, and the two guide chutes 31 are disposed in one-to-one correspondence with the two guide pin heads 14. In this way, the two symmetrical guide pin heads 14 cooperate with the corresponding two guide chutes 31, and when the guide pin head 14 moves relatively along the guide chute 31, the mounting screw 10 does not skew relative to the lock sleeve 30, making the relative movement between the mounting screw 10 and the lock sleeve 30 stable and smooth.

In some embodiments of the present application, the mounting device 100 further includes a pin rod member (not shown in the figure), the pin rod member is installed on the mounting screw 10. Specifically, the mounting screw 10 is provided with an insertion hole, the pin rod member is inserted into the insertion hole, and both ends of the pin rod member protrude from the mounting screw 10 to respectively form the two guide pin heads 14. Further, an axis of the pin rod member is perpendicular to the axis of the mounting screw 10. This forming method for obtaining the two guide pin heads 14 is simple and effective, with high forming efficiency.

In some embodiments of the present application, the two guide pin heads 14 and the screw body of the mounting screw 10 may be integrally formed. Alternatively, the two guide pin heads 14 may be welded and fixed on the screw body of the mounting screw 10.

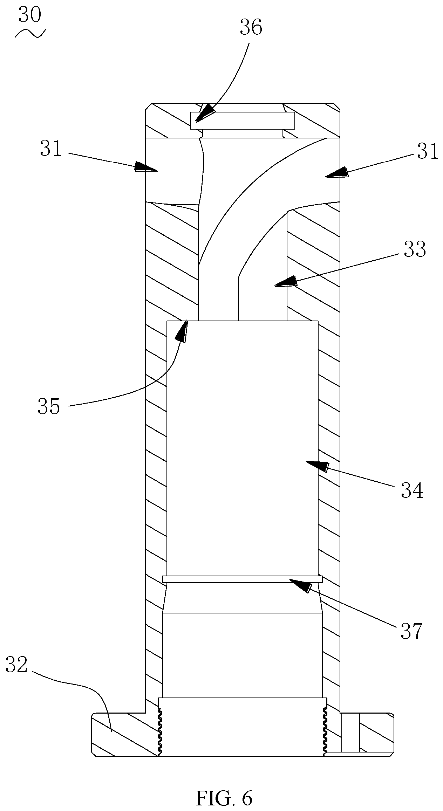

In some embodiments of the present application, as shown in FIG. 6, the through hole of the lock sleeve 30 includes a first hole section 33 and a second hole section 34, and a first step surface 35 is formed between the first hole section 33 and the second hole section 34. Further, an end of the guide chute 31 away from the pressure cap 20 penetrates to the first step surface 35. Therefore, when the first end of the mounting screw 10 passes through the through hole of the lock sleeve 30 from the end of the lock sleeve 30 provided with the limiting portion 32, the guide pin head 14 directly slides into the guide chute 31 from the slot end opening of the guide chute 31 on the first step surface 35, with high assembly efficiency.

In some embodiments, as shown in FIG. 3 and FIG. 9, the mounting device 100 further includes a third sealing member 53, and the third sealing member 53 is disposed between an end surface of the tightening screw sleeve 40 close to the pressure cap 20 and the first step surface 35 to achieve a sealing arrangement. In this way, by sealing between the tightening screw sleeve 40 and the first step surface 35 via the third sealing member 53, the interior of the lock sleeve 30 can be further sealed, thereby better preventing volatilization and loss of the lubricating substance in the lock sleeve 30, and better preventing external moisture and impurities from entering the interior of the lock sleeve 30, preventing the problem of wear and corrosion.

In some embodiments of the present application, as shown in FIG. 6, the hole wall of the first hole section 33 of the lock sleeve 30 is provided with a first mounting annular groove 36, and the first sealing member 51 is installed in the first mounting annular groove 36. In this way, during the relative movement process of the lock sleeve 30 and the mounting screw 10, the first sealing member 51 is restricted in the first mounting annular groove 36, and the first sealing member 51 does not slide along the axial direction of the lock sleeve 30 to disengage from the first mounting annular groove 36, thereby ensuring the sealing effect of the first sealing member 51 on the gap between the mounting screw 10 and the hole wall of the through hole of the lock sleeve 30.

In some embodiments of the present application, as shown in FIG. 5, the guide chute 31 includes a first slot section 311 and a second slot section 312 that are in communication, an extension direction of the first slot section 311 is obliquely disposed with respect to the axis of the lock sleeve 30, an extension direction of the second slot section 312 is parallel to the axis of the lock sleeve 30, an end of the second slot section 312 away from the first slot section 311 penetrates to the first step surface 35, and the guide pin head 14 slides in from the slot end opening of the second slot section 312 on the first step surface 35, with high assembly efficiency. During the process of screwing the tightening screw sleeve 40, the guide pin head 14 slides along the second slot section 312, and by the sliding distance of this second slot section 312, a little floating gap is reserved between the to-be-mounted workpiece and the carrier 220, thereby facilitating the mounting operation. Then, the guide pin head 14 slides into the first slot section 311 to continue sliding. During the process of the guide pin head 14 sliding along the first slot section 311, the mounting screw 10 rotates synchronously, making the long side of the rectangular pressure cap 20 intersect with the long side of the rectangular through hole 221. The pressure cap 20 cannot disengage from the carrier 220, until the to-be-mounted workpiece and the carrier 220 clamp the pressure cap 20 and the lock sleeve 30 therebetween, which means that the to-be-mounted workpiece is mounted and fixed on the carrier 220 via the mounting device 100.

As shown in FIG. 3, FIG. 5, and FIG. 9, the mounting device 100 further includes a cover assembly 60 and a fourth sealing member 54. The cover assembly 60 is installed at an end of the through hole of the lock sleeve 30 away from the pressure cap 20 via a threaded connection. The tightening screw sleeve 40 is provided with a second step surface 42, and the fourth sealing member 54 is sleeved on the tightening screw sleeve 40 and abuts against the second step surface 42. Moreover, a side of the fourth sealing member 54 away from the second step surface 42 abuts against the cover assembly 60. Further, as shown in FIG. 6, the hole wall of the second hole section 34 of the lock sleeve 30 is provided with a second mounting annular groove 37, a circumferential region of the fourth sealing member 54 is embedded in the second mounting annular groove 37, and the fourth sealing member 54 is squeezed and deformed by an end surface of the tightening screw sleeve 40 and the second step surface 42, thereby the fourth sealing member 54 seals the gap between the tightening screw sleeve 40 and the hole wall of the second hole section 34. In this way, the interior of the lock sleeve 30 is further sealed, thereby better preventing volatilization and loss of the lubricating substance in the lock sleeve 30, and better preventing external moisture and impurities from entering the interior of the lock sleeve 30, preventing the problem of wear and corrosion.

In some embodiments of the present application, as shown in FIG. 5, the cover assembly 60 includes a cover body 61 and a spring 62, the cover body 61 is installed at an end of the through hole of the lock sleeve 30 away from the pressure cap 20 via a threaded connection, the spring 62 is sleeved on the tightening screw sleeve 40, and both ends of the spring 62 abut against the fourth sealing member 54 and the cover body 61 respectively. In this way, by screwing the cover body 61, the cover body 61 applies force to the spring 62 to compress the spring 62, and then the fourth sealing member 54 is squeezed by the elastic force of the spring 62, thereby sealing the gap between the tightening screw sleeve 40 and the hole wall of the second hole section 34. This makes the interior of the lock sleeve 30 further sealed, thereby better preventing volatilization and loss of the lubricating substance in the lock sleeve 30, and better preventing external moisture and impurities from entering the interior of the lock sleeve 30, preventing the problem of wear and corrosion.

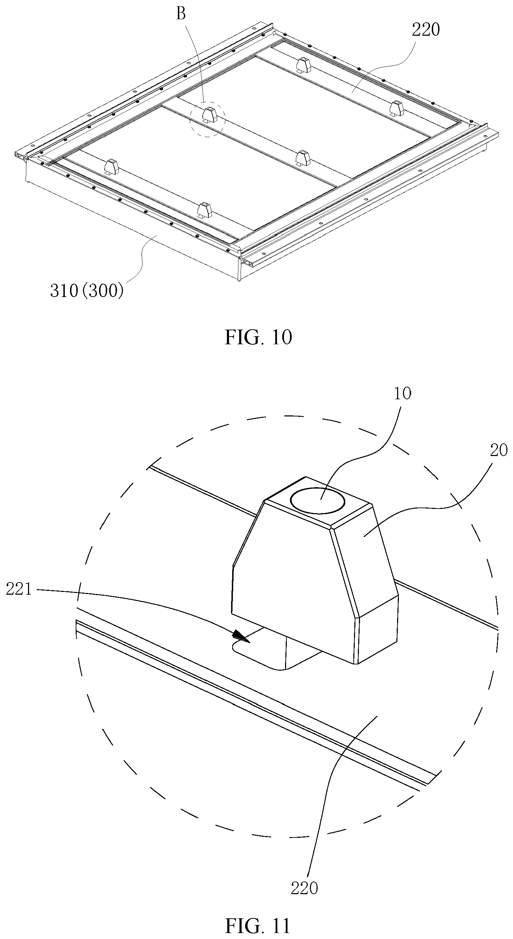

According to another aspect of the present application, a battery kit is provided. Specifically, as shown in FIG. 10 and FIG. 11, the battery kit includes a battery 300 and the mounting device 100, the battery 300 includes a battery box 310, the battery box 310 is provided with a mounting through hole, and the mounting screw 10 of the mounting device 100 sequentially passes through the mounting through hole and the carrier 220 along a direction from the lock sleeve to the to-be-mounted workpiece. Moreover, the lock sleeve 30 is inserted into the mounting through hole, and the flange structure of the lock sleeve 30 is connected and fixed to the bottom of the battery box 310 via multiple bolts.

When the battery 300 is mounted and fixed on the carrier 220 using the mounting device 100 of the present application, during assembly, the first end of the mounting screw 10 together with the pressure cap 20 sequentially passes through the lock sleeve 30, the mounting through hole of the battery box 310, and the through hole 221 of the carrier 220 along a direction from the lock sleeve to the to-be-mounted workpiece, and the flange structure of the lock sleeve 30 is fixedly connected to the bottom of the battery box 310. In this way, when the tightening screw sleeve 40 is tightened with the external thread 13 of the mounting screw 10, the battery box 310 and the carrier 220 can clamp the pressure cap 20 and the lock sleeve 30 therebetween, that is, the battery 300 is mounted and fixed on the carrier 220, with convenient installation and high installation efficiency. Conversely, when the battery 300 needs to be disassembled, the tightening screw sleeve 40 is rotated and loosened from the external thread 13, making the pressure cap 20 align with the through hole 221 of the carrier 220, such that the pressure cap 20 can be disengaged from the carrier 220, thereby disengaging the battery 300 from the carrier 220, with convenient disassembly and high disassembly work efficiency.

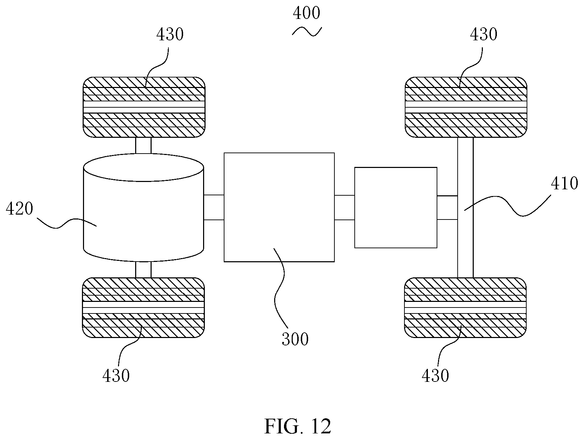

According to yet another aspect of the present application, an electric vehicle 400 is provided, as shown in FIG. 12. Specifically, the electric vehicle 400 includes a vehicle frame 410 and the battery kit, and the battery 300 is mounted and installed on the vehicle frame 410 via the mounting device 100. The battery 300 provides electric energy to the drive motor 420, and the drive motor 420 outputs power and transmits the power to the wheel 430 via a transmission system, thereby driving the wheel 430 to rotate, enabling the electric vehicle to travel normally.

When the battery 300 is mounted and fixed on the vehicle frame 410 using the mounting device 100 of the present application, during assembly, the first end of the mounting screw 10 together with the pressure cap 20 sequentially passes through the lock sleeve 30, the mounting through hole of the battery box 310, and the through hole 221 of the vehicle frame 410 along a direction from the lock sleeve to the to-be-mounted workpiece, and the flange structure of the lock sleeve 30 is fixedly connected to the bottom of the battery box 310. In this way, when the tightening screw sleeve 40 is tightened with the external thread 13 of the mounting screw 10, the battery box 310 and the vehicle frame 410 can clamp the pressure cap 20 and the lock sleeve 30 therebetween, that is, the battery 300 is mounted and fixed on the vehicle frame 410, with convenient installation and high installation efficiency. Conversely, when the battery 300 needs to be disassembled, the tightening screw sleeve 40 is rotated and loosened from the external thread 13, making the pressure cap 20 align with the through hole 221 of the vehicle frame 410, such that the pressure cap 20 can be disengaged from the vehicle frame 410, thereby disengaging the battery 300 from the vehicle frame 410, with convenient disassembly and high disassembly work efficiency.

The above are only optional embodiments of the present application and are not used to limit the present application. For those skilled in the art, various changes and modifications can be made to the present application. Any modifications, equivalent replacements, improvements, and the like made within the spirit and principles of the present application shall be included within the scope of the claims of the present application.

## Claims

1. A mounting device, comprising:
a mounting screw, having a first end and a second end, the second end of the mounting screw being provided with an external thread;
a lock sleeve, the lock sleeve being fixedly disposed in a relative position with respect to a to-be-mounted workpiece, and the first end of the mounting screw being configured to sequentially pass through the lock sleeve, the to-be-mounted workpiece, and a carrier along a direction from the lock sleeve to the to-be-mounted workpiece;
a pressure cap, connected to the first end of the mounting screw, the pressure cap being configured to abut against the carrier;
a tightening screw sleeve, provided with a threaded hole adapted to the external thread, the tightening screw sleeve being screwed with the second end of the mounting screw, and the tightening screw sleeve blocking the lock sleeve from disengaging from the mounting screw; and
a first sealing member, sleeved on the mounting screw and located at a through hole of the lock sleeve, the first sealing member being configured to seal a gap between the mounting screw and a hole wall of the through hole of the lock sleeve.

2. The mounting device according to claim 1, wherein
the mounting screw is provided with a guide pin head, the hole wall of the through hole of the lock sleeve has a guide chute, the guide pin head is slidably disposed in the guide chute, and the first sealing member is disposed between the guide chute and an end surface of the lock sleeve away from the second end of the mounting screw.

3. The mounting device according to claim 2, wherein
an extension direction of the guide chute is obliquely disposed with respect to an axis of the lock sleeve, the lock sleeve is provided with a limiting portion, and the limiting portion is configured to cooperate with the to-be-mounted workpiece to limit rotation of the lock sleeve relative to the to-be-mounted workpiece.

4. The mounting device according to claim 3, wherein
the limiting portion is a flange structure disposed at an end of the lock sleeve away from the pressure cap, and the flange structure is configured to be fixedly connected to the to-be-mounted workpiece.

5. The mounting device according to claim 3 or 4, wherein
the pressure cap is fixedly connected to the first end of the mounting screw; or the pressure cap is detachably connected to the first end of the mounting screw.

6. The mounting device according to claim 5, wherein
a projection of the pressure cap along an axial direction of the mounting screw has a long side direction and a short side direction that are perpendicular to each other, wherein after the long side direction of the pressure cap rotates relative to the carrier, the pressure cap is capable of abutting against the carrier.

7. The mounting device according to any one of claims 2 to 4, wherein
the guide chute penetrates to an outer side wall of the lock sleeve, the mounting device further comprises a second sealing member, the second sealing member is fitted and sealed in the guide chute, and the second sealing member is spaced apart from the guide pin head.

8. The mounting device according to claim 7, wherein
the number of the guide pin heads is two, and the two guide pin heads are symmetrically disposed with respect to an axis of the mounting screw; and the number of the guide chutes is two, and the two guide chutes are disposed in one-to-one correspondence with the two guide pin heads.

9. The mounting device according to claim 8, wherein
the mounting device further comprises a pin rod member, the pin rod member is installed on the mounting screw, an axis of the pin rod member is perpendicular to the axis of the mounting screw, and both ends of the pin rod member protrude from the mounting screw to respectively form the two guide pin heads.

10. The mounting device according to claim 7, wherein
the through hole of the lock sleeve comprises a first hole section and a second hole section, a first step surface is formed between the first hole section and the second hole section, an end of the guide chute away from the pressure cap penetrates to the first step surface, and the mounting device further comprises a third sealing member, the third sealing member being disposed between an end surface of the tightening screw sleeve close to the pressure cap and the first step surface to achieve a sealing arrangement.

11. The mounting device according to claim 10, wherein
the guide chute comprises a first slot section and a second slot section that are in communication, an extension direction of the first slot section is obliquely disposed with respect to the axis of the lock sleeve, an extension direction of the second slot section is parallel to the axis of the lock sleeve, and an end of the second slot section away from the first slot section penetrates to the first step surface.

12. The mounting device according to claim 10, wherein
the mounting device further comprises a cover assembly and a fourth sealing member, the cover assembly is installed at an end of the through hole of the lock sleeve away from the pressure cap, the tightening screw sleeve is provided with a second step surface, the fourth sealing member is sleeved on the tightening screw sleeve and abuts against the second step surface, and a side of the fourth sealing member away from the second step surface abuts against the cover assembly.

13. The mounting device according to any one of claims 1 to 4, wherein
the hole wall of the through hole of the lock sleeve is provided with a first mounting annular groove, and the first sealing member is installed in the first mounting annular groove.

14. A battery kit, comprising a battery and the mounting device according to any one of claims 1 to 13, wherein the battery comprises a battery box, the battery box being provided with a mounting through hole, and the mounting screw of the mounting device sequentially passes through the mounting through hole and the carrier along a direction from the lock sleeve to the to-be-mounted workpiece.

15. An electric vehicle, comprising a vehicle frame and the battery kit according to claim 14, wherein the battery is mounted and installed on the vehicle frame via the mounting device.
